**Europäisches Patentamt**

**European Patent Office**

**Office européen des brevets**

(11) Publication number: **0 203 200**
**B1**

## (12) EUROPEAN PATENT SPECIFICATION

(45) Date of publication of patent specification: **24.01.90**

(21) Application number: **85905880.2**

(22) Date of filing: **15.11.85**

(86) International application number:
**PCT/JP85/00639**

(87) International publication number:
**WO 86/02960 22.05.86 Gazette 86/11**

(51) Int. Cl.⁵: **D 06 B 23/20**

(54) **AUTOMATIC DISSOLUTION APPARATUS.**

(30) Priority: **16.11.84 JP 173145/84 u**

(43) Date of publication of application:
**03.12.86 Bulletin 86/49**

(45) Publication of the grant of the patent:
**24.01.90 Bulletin 90/04**

(84) Designated Contracting States:
**DE GB IT**

(56) References cited:
**JP-A-5 766 171**
**JP-A-5 841 966**
**US-A-2 900 176**
**US-A-4 252 139**

(73) Proprietor: **KABUSHIKI KAISHA KAWAKAMI TEKKOSHO**
**154, Isecho**
**Ashikaga-shi, Tochigi 326 (JP)**

(73) Proprietor: **NIPPON KAYAKU KABUSHIKI KAISHA**
**Tokyo Fujimi Bldg. 11-2 Fujimi 1-chome**
**Chiyoda-ku**
**Tokyo 102 (JP)**

(72) Inventor: **KAWAKAMI, Taichi 154, Isecho**
**Ashikaga-shi**
**Tochigi 326 (JP)**
Inventor: **SHINTATE, Hiroshi**
**Nikka Apt. 133 1831-1 Kawaguchi-machi**
**Fukuyama-shi Hiroshima-ken (JP)**

(74) Representative: **Gordon, Michael Vincent et al**
**GILL JENNINGS & EVERY 53-64 Chancery Lane**
**London WC2A 1HN (GB)**

Courier Press, Leamington Spa, England.

## Description

This invention relates to a dissolving device for automatically preparing solutions of dyes for use in various dyeing experiments.

Operations for dissolutions (dissolution means in this invention both dissolution of water-soluble dyes and dispersion of water-insoluble dyes such as disperse dyes) of dyes and the like have been carried out by the manual operation of workers using a balance, a messflask, a dissolving vessel, an agitating device, etc. They include operations for accurate sampling of dyes or the like, accurate charging of media (media means in this invention water, as well as organic solvents containing water), and agitating operation for dissolving them, and such operations require much time and skill in order to obtain a required accuracy. Further, the thus obtained dye solutions tend to cause precipitation, coagulation, etc. till they are served for actual dyeings and, particularly when it is required to prepare a number of dye solutions, operations from the dissolving work of dyes to the dyeing inevitably become complicated.

Accordingly, there has been a demand for an automatic dissolving device that does not require much time and skill and can provide an accurate sampling amount, as well as can obtain stable solutions of dyes and the like in which the obtained solutions do not cause coagulation or the like.

A device for automatically preparing dye solutions is disclosed in JP—A—57—66171, which is the basis of the pre-characterising part of claim 1. However, in the device disclosed in that publication, the preparation of dye solutions is performed by volumetrically measuring a stock solution and a liquid to be added into the stock solution, and consequently the preparation cannot be accurately made in case bubbles form in the stock solution or the specific gravity of the stock solution changes due to a variation of the atmospheric temperature. In addition, from the structural standpoint, the device described in that publication cannot readily carry a plurality of supplying means (dispensers) corresponding to different kinds of stock solution. Therefore, there is the drawback that the liquid supplying means has to be washed every time that the kind of the stock solution to be used for preparation is changed.

That is, the present invention relates to an automatic dissolving device including a turntable having a plurality of holes around the circumference thereof to accept a plurality of dissolving or mixing vessels, means for supplying a predetermined amount of a medium or stock solution to each of the dissolving or mixing vessels, and a mathematical operation control device for controlling the turntable and the supplying means, characterized in that the automatic dissolving device further includes an electronic type balance disposed below the turntable to weigh the dissolving or mixing vessels, and one or more magnet-type stirring devices arranged below the turntable so as to stir the solutions in the dissolving or mixing vessels, the supplying means including an electromagnetic valve situated midway in a pipeline from a medium or stock solution tank to the dissolving or mixing vessels, and the mathematical operation control device further controlling the electronic type balance and the magnet-type stirring devices.

It is possible by using such a device to prepare stable solutions of dyes or the like automatically and successively while shortening the working time, requiring no operator's skill, at an accurate weighed amount and causing no changes such as precipitation or coagulation during storage till dyeings. The application of the automatic dissolving device according to this invention is not restricted to dissolutions of dyes but is satisfactorily applicable also to the preparation of solutions consisting of dyes and dyeing auxiliaries such as sodium sulphate and soda ash, or to the preparation of solutions consisting only of dyeing auxiliaries.

In this invention, the tare of the dissolving vessel (receiver vessel) situated in a hole of the turntable is at first measured by the electronic type balance disposed below the turntable and then an eye-measured dye is charged and the weight of the vessel containing the dye is again measured, whereby the amount of the weighed dye is exactly calculated by the mathematical operation control device interlocking with the electronic type balance. Then, after rotating the turntable to another position and adding a medium controlled to a predetermined amount by the mathematical operation control device by opening the electromagnetic valve situated midway in a pipeline from a medium tank to the receiving (dissolving) vessel, the dye is dissolved by the stirring conducted by a number of magnet-type stirring devices also arranged below the turntable and, thereafter, the solution containing the dye is stirred by another magnet-type stirring device arranged below the turntable to keep the solution stable. By repeating the above-mentioned procedures using a number of receiving vessels while successively turning the turntable, solutions of a number of dyes can be prepared.

The solution thus prepared containing a dye or the like can be served for a dyeing, or the solution thus obtained may be used as a stock solution for preparing a mixed solution. That is, solutions of dyes or the like of the known concentration prepared as described above contained in a number of vessels as stock solutions (stock solution tanks) are discharged from the tanks each by a predetermined amount into dissolving vessels (mixing vessels) to prepare a mixed solution of predetermined composition and concentration. In this case, it is desirable to dispose a magnet-type stirring device for preventing dyes or the like from precipitation and coagulation below the stock solution tanks.

It is necessary on the automatic dissolving device according to this invention to bring the receiving vessel, the electronic type balance and the magnet-type stirring device into contact or in adjacent with each other and, as methods therefor, a method of vertically moving the turntable on which the receiving vessels are disposed or a method of vertically moving the electronic type balance and the magnet-type stirring device may be employed.

In the automatic dissolving device according to this invention, vessels made of plastics, glass, porcelain and iron can be used as the medium or stock solution tank and the dissolving or mixing vessel, and as a vessels made of plastics, for example, a vessel made of polypropylene may be usually employed.

While iron, teflon-coated iron, plastics and the like can be used as a material for the pipeline, and use of transparent or semi-transparent plastics, particularly, teflon is preferred in view of easy fabrication.

Electromagnetic valves made of iron, tefloncoated iron or copper can be used for providing acid-resistance and any of commercially available products can be used as long as the valve can correctly be opened and closed by electrical signals from the mathematical operation control device.

For the electronic type balance, those having a function of converting weighed values into electrical signals and sending them to the mathematical operation control device are used and the usual commercially available electronic type balance can preferably be used since they have such a function. However, those electronic type balance having no such function can also be used by attaching such a function. The electronic type balance is described, for example, in Analytical Chemistry, Vol. 19, p262—303, etc. and commercial products are easily available at present.

Turntables made of iron and plastics can be used and, particularly, those made of glass fiber-reinforced plastics are preferred.

The magnet-type stirring device has a magnet directly coupled with a motor which rotates or stops depending on signals from the mathematical control device. While those commercially available as a magnet stirrer can usually be used as they are, those capable of controlling the rotating speed by electrical signals are preferred. The medium or the stock solution in the medium or stock solution tank is spontaneously flown down (discharge) by opening the electromagnetic valve for a predetermined of time, and it is also possible to accelerate the speed of the down flow (discharge) by adding air pressure of about 0.01 to 0.1 (kg/cm$^2$) as required to the inside of the medium tank or the stock solution tank.

The mathematical operation control device has a function of centrally controlling the electromagnetic valve, the turntable, the electronic type balance, the magnet-type stirring device, etc. and the program for obtaining a solution at a predetermined concentration is incorporated in a conventional manner. The basic procedures in preparations of solutions controlled by the mathematical operation control device are as follows. That is, a predetermined concentration of dyes or the like is at first inputted to and stored in the mathematical operation control device. Then, after weighing the tare of the dissolving vessel on the turntable by the electronic type balance, it is stored in the mathematical operation control device. Then, the dye or the like charged by an eye-measured amount to the vessel is weighed accurately and then a solvent is discharged into the vessel by opening the electromagnetic valve till the stored predetermined concentration is attained. After the solution at the predetermined concentration has been obtained, the dissolving vessel is introduced to the magnet-type stirring device by moving the turntable and the stirring is started to dissolve the dye or the like.

Brief Description of Drawings

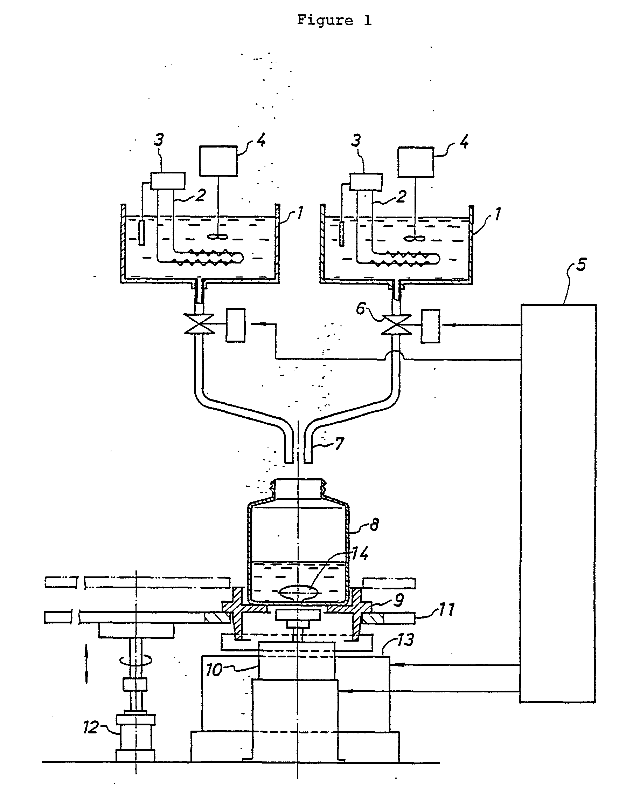

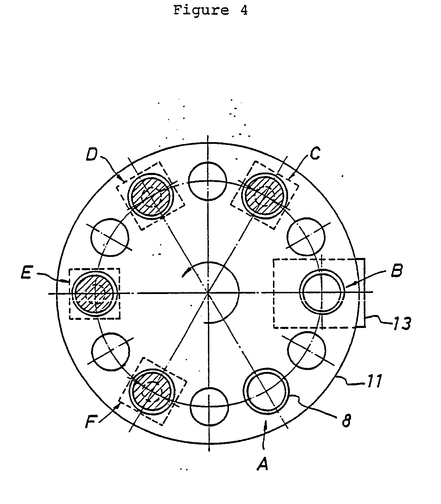

Figures 1 through 3 are entire views for the present invention, and Figure 4 is a plan view for the turntable showing the order of dissolving the dye or the like in the present invention.

The present invention will now be explained more concretely while referring to the accompanying drawings.

Figure 1 is an entire view for one mode of practicing the present invention. In this embodiment, the turntable 11 is moved vertically so that the height of the turntable may be adjusted to the height of the electronic type balance and the magnet-type stirring device.

In Figure 1, 1 represents medium tanks made of SUS (stainless steel) which are illustrated to be disposed, for example, in a dual system, so that two kinds of media can be used. The immersing type electrical heater 2 is attached to the medium tank so as to maintain the medium temperature constant, and the medium temperature can be controlled by the thermostat 3. The medium is stirred by the blade-type stirring device 4. The electromagnetic valve 6 is opened or closed by an electrical signal from the mathematical operation control device 5 and, after discharging the medium from the medium tank into the dissolving vessel, the dissolution is promoted by the magnet-type stirring device 10 disposed below the turntable 11.

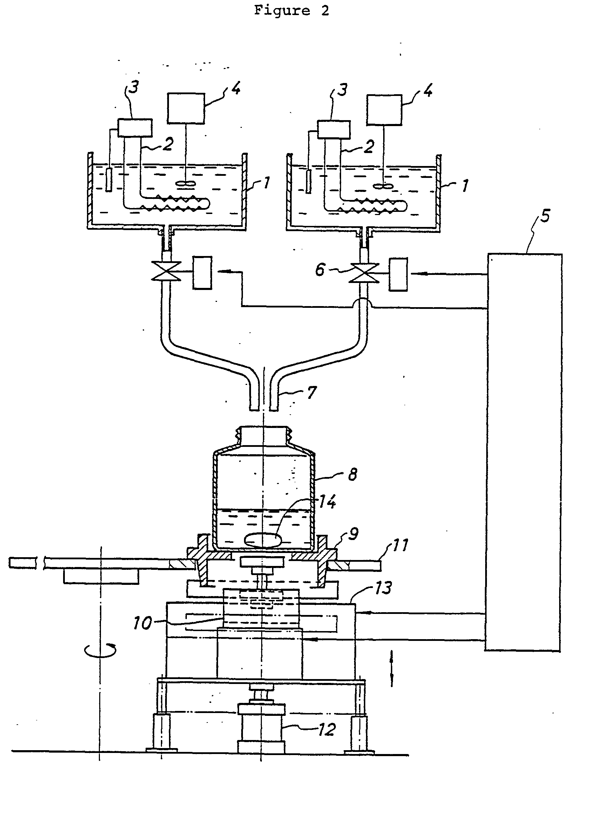

Figure 2 is another mode of practicing the present invention. In this embodiment, the turntable 11 is fixed, while the electronic type balance 13 and the magnet-type stirring device 10 are caused to move vertically.

In Figure 2, 1 represents medium tanks made of SUS (stainless steel) which are illustrated to be disposed, for example, in a dual system so that two kinds of the media can be used. The immersing type electrical heater 2 is attached to the medium tank so as to maintain the medium temperature constant and the medium temperature can be controlled by the thermostat 3. The medium is stirred by the blade-type stirring device 4. The electromagnetic valve 6 is opened or closed by an electrical signal from the mathematical operation control device 5, and the medium in the medium tank is discharged by the previously indicated amount from the discharge nozzle 7 into the receiving vessel 8, in which 14 represents a magnetic rotator.

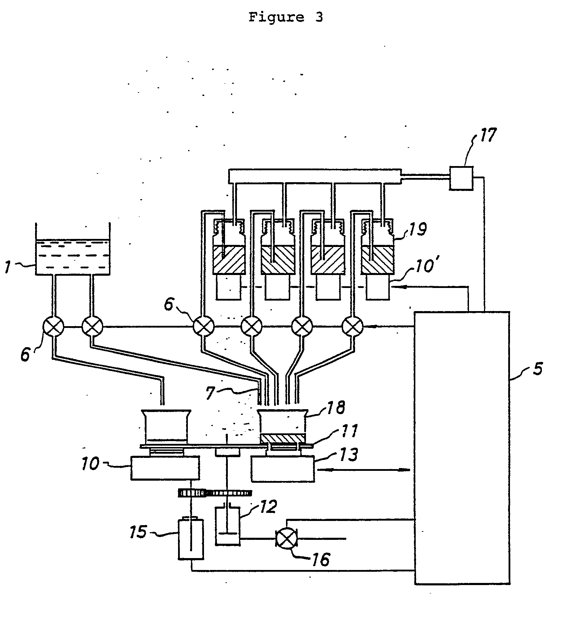

Figure 3 shows a further mode of practicing the present invention. In this embodiment, the electronic type balance device 13 and the magnet-type stirring device 10 are fixed, while the turntable 11 is moved vertically.

In Figure 3, 19 represents a stock solution tank and 18 represents a receiving vessel (mixing vessel). Further, 17 represents an air pump for applying air pressure to the stock solution tank and 10' represents a magnet-type stirring device for stirring the stock solution. 16 represents an ON-OFF valve for supplying pressurized air to the air cylinder 12. 15 represents a motor for rotating the turntable 11. Since air pressure is applied to the stock solution tank 19 in this embodiment, the stock solution is flown down more rapidly.

Figure 4 schematically shows the order of dissolving the dye or the like in the present invention, in which the dye or the like eye-measured is manually charged to the inside of the receiving vessel 8 at the position A placed at the holes of the turntable 11. After the charging has been completed, the turntable is rotated and, at the position B, an accurate weight for the charged dye or the like is measured by the electronic type balance 13 and the measured weight is stored in the memory means in the mathematical operation control device. Then, the turntable is rotated and, at the position C, the prescribed amount of a medium is discharged depending on the weighed dye or the like so as to form a previously indicated concentration of a solution of the dye or the like. Successively, the stirring is started by the magnet-type stirring devices disposed below the turntable to promote the dissolution of the dye or the like. The magnet-type stirring devices are also disposed at the positions D, E and F, and the receiving pan 9 for the receiving vessel is holded at the center so that the rotating magnet 10 of the magnet-type stirring device can situate just below the receiving vessel 8, for example, as shown in Figures 1 and 3, and so that effective stirring treatment may be performed when the receiving vessels on the turntable arrive at the respective positions and the turntable is moved downwardly. And, in the device shown in Figure 2, when the receiving vessels on the turntable are rotated to the predetermined positions, the electronic type balance and the magnet-type stirring devices move upwardly to measure the amounts of dyes or the like accurately and stir the solution of dyes or the like.

In this way, the turntable stops at each of the positions A, B, C, D, E and F (Figure 4) and each of the processings for measurement, dissolution and stirring is continuously carried out. While Figure 4 shows the turntable where six receiving vessels are used, they may be used by twelve as required.

In a case of resin-made dissolving vessel tending to be charged electrostatically, a charge eliminating device is preferably disposed just before the position B (on the side of the position A) in Figure 4 for preventing the bad effect of the static electricity on the electronic type balance. Furthermore, a spacer made of plastic may be disposed between the dissolving or mixing vessel and the electronic type balance such that the magnetic force possessed by the rotor give no effect on the electronic type balance.

Industrial Applicability

Dissolution of dyes or the like accurately and automatically and under well stirred state is made possible without requiring much time and skill.

**Claims**

1. An automatic dissolving device including a turntable (11) having a plurality of holes around the circumference thereof to accept a plurality of dissolving or mixing vessels (8, 18), means for supplying a predetermined amount of a medium or stock solution to each of the dissolving or mixing vessels, and a mathematical operation control device (5) for controlling the turntable and the supplying means, characterized in that the automatic dissolving device further includes an electronic type balance (13) disposed below the turntable to weigh the dissolving or mixing vessels, and one or more magnet-type stirring devices (10) arranged below the turntable so as to stir the solutions in the dissolving or mixing vessels, the supplying means including an electromagnetic valve (6) situated midway in a pipeline from a medium or stock solution tank (1, 19) to the dissolving or mixing vessels, and the mathematical operation control device further controlling the electronic type balance and the magnet-type stirring devices.

2. A dissolving device according to claim 1, characterized in that there is a plurality of the supplying means.

3. A dissolving device according to claim 1 or claim 2, characterized in that the medium or stock solution tank is provided with an immersing type electrical heater (2) for maintaining a temperature of the medium or stock solution constant, a thermostat (3) for controlling the temperature, and a blade-type stirring device (4) for stirring the solution.

4. A dissolving device according to any one of claims 1 to 3, characterized in that the turntable is fixed with respect to the vertical direction, but means are provided for moving the electronic type balance and the magnet-type stirring device(s) in the vertical direction.

5. A dissolving device according to any one of claims 1 to 3, characterized in that the electronic type balance and the magnet-type stirring device(s) are fixed, and means are provided for moving the turntable in the vertical direction.

6. A dissolving device according to any preceding claim, characterized in that the dissolving device further includes air supplying means (17) for accelerating a flow of the solution through the electromagnetic valve by adding air pressure to the inside of the tank (19) and a magnet-type stirring device (10') for stirring the solution in the tank.

7. A dissolving device according to any preceding claim, characterized in that the dissolving device further includes a pan (9) for holding the vessel (8) so that a rotating magnet of the magnet-type stirring device (10) can be situated just below the vessel.

8. A dissolving device according to any preceding claim, characterized in that the electronic type balance (13) is arranged at a first predetermined position and below a passageway through which the holes pass in rotation of the turntable (11) for weighing a tare of the vessel and the vessel in which a material is received.

9. A dissolving device according to claim 8, characterized in that the magnet-type stirring device (10) is arranged below the passageway and at a second predetermined position to perform a mixing of the material with the solution.

10. A dissolving device according to claim 9, characterized in that a plurality of the magnet-type stirring devices (10) are arranged with equal angular distance from each other below the passageway defined by a one-half rotation of the turntable from the second predetermined position.

**Patentansprüche**

1. Selbsttätige Lösevorrichtung mit einem Drehtisch (11), welcher an seinem Umfang mit mehreren Ausnehmungen versehen ist, um mehrere Lösungs- oder Mischgefäße (8, 18) aufzunehmen, eine Einrichtung zur Zuführung einer vorbestimmten Menge eines Mediums oder einer Vorratslösung in jedes der Lösungs- oder Mischgefäße und einer mathematischen Betriebssteuereinrichtung (5) zur Steuerung des Drehtisches und der Zuführeinrichtung, dadurch gekennzeichnet, daß die selbsttätige Lösevorrichtung weiterhin eine elektronische Waage (13) umfaßt, welche unterhalb des Drehtisches angeordnet ist, um die Lösungs- oder Mischgefäße zu wiegen sowie eine oder mehrere magnetische Rühreinrichtungen (10), welche unterhalb des Drehtisches gelagert sind, um die Lösungen in den Lösungs- oder Mischgefäßen zu rühren, wobei die Zuführeinrichtung ein elektromagnetisches Ventil (6) umfaßt, welches im mittleren Bereich einer Rohrleitung von einem Medium oder Vorratslösungstank (1, 19) zu den Lösungs- oder Mischgefäßen angeordnet ist und wobei die mathematische Betriebssteuereinrichtung weiterhin die elektronische Waage und die magnetischen Rühreinrichtungen steuert.

2. Lösevorrichtung nach Anspruch 1, dadurch gekennzeichnet, daß eine Mehrzahl von Zuführeinrichtungen vorgesehen sind.

3. Lösevorrichtung nach Anspruch 1 oder 2, dadurch gekennzeichnet, daß der Medium- oder Vorratslösungstank mit einem eingetauchten elektrischen Heizer (2) versehen ist, um eine Temperatur in dem Medium oder der Vorratslösung konstant zu halten, sowie mit einem Thermostat (3) zur Steuerung der Temperatur und einer Rühreinrichtung (4) einer Blattbauart zum Rühren der Lösung.

4. Lösevorrichtung nach einem der Ansprüche 1 bis 3, dadurch gekennzeichnet, daß der Drehtisch bezüglich der vertikalen Richtung festgelegt ist, daß jedoch Einrichtungen vorgesehen sind, um die elektronische Waage und die Magnet-Rühreinrichtung(en) in vertikaler Richtung zu bewegen.

5. Lösevorrichtung nach einem der Ansprüche 1 bis 3, dadurch gekennzeichnet, daß die elektronische Waage und die magnetische Rühreinrichtung(en) feststehend angeordnet sind und daß Mittel vorgesehen sind, um den Drehtisch in vertikaler Richtung zu bewegen.

6. Lösevorrichtung nach einem der vorhergehenden Ansprüche, dadurch gekennzeichnet, daß die Lösevorrichtungen weiterhin Luftzuführungsmittel (17) zur Beschleunigung eines Flusses der Lösung durch das elektromagnetische Ventil durch Aufbringung von Luftdruck auf die Innenseite des Tanks (19) umfaßt sowie eine magnetische Rühreinrichtung (10) zum Rühren der Lösung in dem Tank.

7. Lösevorrichtung nach einem der vorhergehenden Ansprüche, dadurch gekennzeichnet, daß die Lösevorrichtung weiterhin einen Tiegel (9) umfaßt, um das Gefäß (8) zu halten, so daß ein drehbarer Magnet der Magnet-Rühreinrichtung (10) unterhalb des Gefäßes angeordnet sein kann.

8. Lösevorrichtung nach einem der vorhergehenden Ansprüche, dadurch gekennzeichnet, daß die elektronische Waage (13) in einer ersten vorbestimmten Stellung und unterhalb eines Durchlasses angeordnet ist, durch welchen bei der Drehung des Drehtisches (11) die Ausnehmungen hindurchpassen, um ein Tara des Gefäßes zu wiegen und das Gefäß, in welchem ein Material aufgenommen ist.

9. Lösevorrichtung nach Anspruch 8, dadurch gekennzeichnet, daß die magnetische Rühreinrichtung (10) unter dem Durchlaß angeordnet ist, sowie in einer zweiten vorbestimmten Stellung, um ein Mischen des Materials mit der Lösung durchzuführen.

10. Lösevorrichtung nach Anspruch 9, dadurch gekennzeichnet, daß eine Mehrzahl von magnetischen Rühreinrichtungen (10) in einem gleichen Winkelabstand voneinander unterhalb des Durchlasses angeordnet sind, welcher durch eine Halbdrehung des Drehtisches auf der zweiten vorbestimmten Stellung definiert wird.

**Revendications**

1. Dispositif automatique de dissolution comprenant un plateau tournant (11) présentant, le long de sa circonférence, plusieurs trous destinés à recevoir plusieurs récipients (8, 18) de dissolution ou de mélange, des moyens destinés à fournir une quantité prédéterminée d'un milieu ou d'une solution d'alimentation à chacun des récipients de dissolution ou de mélange, et un dispositif (5) de commande à fonctionnement mathématique destiné à commander le plateau tournant et les moyens d'alimentation, caractérisé en ce que le dispositif automatique de dissolution comprend en outre une balance (13) de type électronique disposée au-dessous du plateau tournant pour peser les récipients de dissolution ou de mélange, et un ou plusieurs dispositifs d'agitation (10) du type à aimant disposés au-dessous du plateau tournant afin d'agiter les solutions se trouvant dans les récipients de dissolution ou de mélange, les moyens d'alimentation comprenant une vanne électromagnétique (6) située à mi-distance dans une conduite allant d'un réservoir (1, 19) de milieu ou de solution d'alimentation jusqu'aux récipients de dissolution ou de mélange, et le dispositif de commande à fonctionnement mathématique commandant en outre la balance de type électronique et les dispositifs d'agitation du type à aimant.

2. Dispositif de dissolution selon la revendication 1, caractérisé en ce qu'il y a plusieurs moyens d'alimentation.

3. Dispositif de dissolution selon la revendication 1 ou la revendication 2, caractérisé en ce que le réservoir de milieu ou de solution d'alimentation est muni d'un élément chauffant électrique (2) du type à immersion destiné à maintenir constante la température du milieu ou de la solution d'alimentation, un thermostat (3) destiné à réguler la température et un dispositif (4) d'agitation du type à lame destiné à agiter la solution.

4. Dispositif de dissolution selon l'une quelconque des revendications 1 à 3, caractérisé en ce que le plateau tournant est fixe par rapport à la direction verticale, mais des moyens sont prévus pour déplacer la balance de type électronique et le ou les dispositifs d'agitation du type à aimant dans la direction verticale.

5. Dispositif de dissolution selon l'une quelconque des revendications 1 à 3, caractérisé en ce que la balance du type électronique et le ou les dispositifs d'agitation du type à aimant sont fixes, et des moyens sont prévus pour déplacer le plateau tournant dans la direction verticale.

6. Dispositif de dissolution selon l'une quelconque des revendications précédentes, caractérisé en ce que le dispositif de dissolution comprend en outre des moyens (17) d'alimentation en air destinés à accélérer un écoulement de la solution à travers la vanne électromagnétique en introduisant une pression d'air à l'intérieur du réservoir (19) et un dispositif (10') d'agitation du type à aimant destiné à agiter la solution dans le réservoir.

7. Dispositif de dissolution selon l'une quelconque des revendications précédentes, caractérisé en ce que le dispositif de dissolution comprend en outre une cuvette (9) destinée à maintenir le récipient (8) afin qu'un aimant tournant du dispositif (10) d'agitation du type à aimant puisse être situé juste au-dessous du récipient.

8. Dispositif de dissolution selon l'une quelconque des revendications précédentes, caractérisé en ce que la balance (13) de type électronique est disposée dans une première position prédéterminée au-dessous d'un passage par lequel les trous passent lors de la rotation du plateau tournant (11) pour peser une tare du récipient et le récipient dans lequel une matière est reçue.

9. Dispositif de dissolution selon la revendication 8, caractérisé en ce que le dispositif (10) d'agitation du type à aimant est disposé au-dessous du passage et en une seconde position prédéterminée pour effectuer un mélange de la matière avec la solution.

10. Dispositif de dissolution selon la revendication 9, caractérisé en ce que plusieurs des dispositifs (10) d'agitation du type à aimant sont disposés à une distance angulaire égale les uns des autres au-dessous du passage défini par une demi-rotation du plateau tournant à partir de la seconde position prédéterminée.

Figure 1

Figure 2

Figure 3

Figure 4